# EUROPEAN PATENT APPLICATION

(11) **EP 3 896 324 A1**
(43) Date of publication of application: **20.10.2021**
(21) Application number: 19896218.5
(22) Date of filing: 09.12.2019
(51) Int. Cl.: F16L 21/08

(54) **PIPE JOINT AND ENGAGING MEMBER**

(30) Priority: 10.12.2018 JP 2018231076
(71) Applicant: BRIDGESTONE CORPORATION, Chuo-ku Tokyo 104-8340 (JP)
(72) Inventor: KASHIWAMATA Tomoaki, Tokyo 104-8340 (JP)
(74) Representative: Oxley, Robin John George
(86) International application number: PCT/JP2019/048106
(87) International publication number: WO 2020/122020

(57) **Abstract**

Provided is a pipe joint including a core material into which a pipe body is inserted in a predetermined insertion direction on an outer circumferential side, and a locking member mounted to the core material, the locking member includes a core material engaging portion received in a groove for the locking member that is formed in an outer circumferential surface of the core material, and a pipe body locking portion locking an inner circumferential surface of the pipe body to be inserted into the core material, and in the core material engaging portion, in a natural state of the locking member, a minimum diameter seen from a front side in the insertion direction of the pipe body is smaller than a maximum diameter of a side surface forming the groove for the locking member, the side surface being on the front side, and a minimum value of a perimeter of an inner circumferential surface is larger than a maximum value of a perimeter of a circumscribed circle on the front side of the groove for the locking member in the core material.

## Description

### TECHNICAL FIELD

The present disclosure relates to a pipe joint and a locking member.

### BACKGROUND

Heretofore, a pipe joint having an outer diameter that can be decreased has been known. For example, in PTL 1, a pipe joint is disclosed in which a locking member preventing a pipe body from falling out of the pipe joint is accommodated between an inner cylinder part and the pipe body to be inserted into the inner cylinder part, so that the outer diameter can be decreased.

### CITATION LIST

### Patent Literature

PTL 1: Japanese Patent Laid-Open No. 2018-035928

### SUMMARY

### (Technical Problem)

As understood from the disclosure of PTL 1, when attaching a locking member to a core material, a diameter of the locking member needs to be increased. However, it might be hard to expand the diameter of the locking member, and it might be difficult to insert and attach the member into the core material.

To solve the problem, an object of the present disclosure is to provide an easy-to-attach pipe joint and an easy-to-attach locking member to the pipe joint.

### (Solution to Problem)

(1) The present disclosure is directed to a pipe joint including a core material into which a pipe body is inserted in a predetermined insertion direction on an outer circumferential side, and a locking member mounted to the core material, wherein the locking member includes a core material engaging portion received in a groove for the locking member that is formed in an outer circumferential surface of the core material, and a pipe body locking portion locking an inner circumferential surface of the pipe body to be inserted into the core material, and in the core material engaging portion, in a natural state of the locking member, a minimum diameter seen from a front side in the insertion direction of the pipe body is smaller than a maximum diameter of a side surface forming the groove for the locking member, the side surface being on the front side, and a minimum value of a perimeter of an inner circumferential surface is larger than a maximum value of a perimeter of a circumscribed circle on the front side of the groove for the locking member in the core material.

### (Advantageous Effect)

According to the present disclosure, an easy-to-attach pipe joint and an easy-to-attach locking member to the pipe joint can be provided.

### BRIEF DESCRIPTION OF THE DRAWINGS

In the accompanying drawings:
FIG. 1 is a cross-sectional view schematically illustrating a pipe joint according to an embodiment of the present disclosure;
FIG. 2 is an external perspective view schematically illustrating a locking member of FIG. 1 in a natural state;
FIG. 3 is a top view of the locking member of FIG. 2;
FIG. 4 is an external perspective view schematically illustrating a modification of the locking member; and
FIG. 5 is a view schematically illustrating a modification of a core material engaging portion.

### DETAILED DESCRIPTION

Hereinafter, description will be made as to an embodiment of the present disclosure with reference to the drawings.

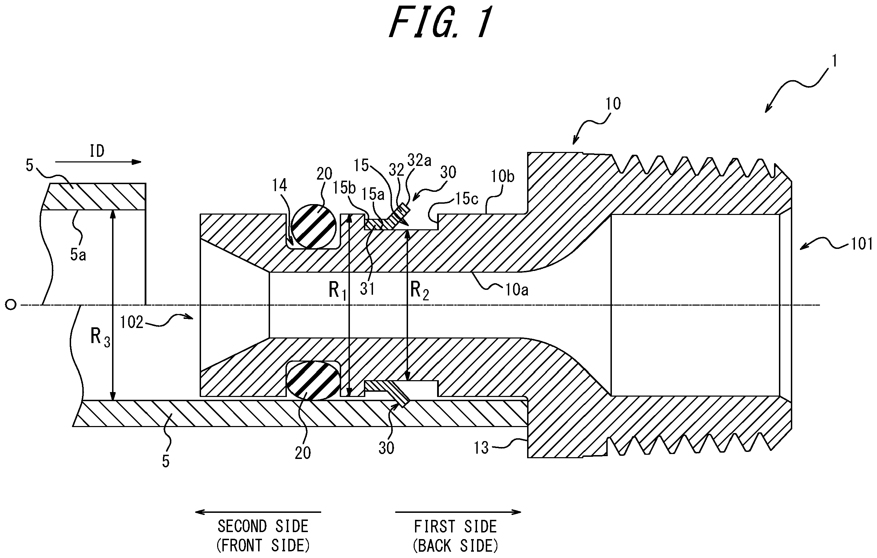

FIG. 1 is a cross-sectional view schematically illustrating a pipe joint 1 according to an embodiment of the present disclosure. FIG. 1 illustrates a cross section of the pipe joint 1 along a central axis O. FIG. 1 illustrates a state before a pipe body 5 is inserted into the pipe joint 1 on an upper side of the central axis O, and illustrates a state after the pipe body 5 is inserted into the pipe joint 1 on a lower side of the central axis O. The pipe joint 1 according to the present embodiment is usable suitably for water supplying and hot water supplying pipes, and usable as pipes for any fluid including a liquid other than water or a gas.

The central axis O of the pipe joint 1 is a flow path axis of a fluid passage defined in the pipe joint 1. In the present embodiment, the pipe joint 1 is formed substantially in an I-shape including the central axis O that is linear. Additionally, the pipe joint 1 may be formed substantially in any shape such as an L-shape, a T-shape, or a cross shape.

In an example illustrated in FIG. 1, the pipe joint 1 includes a pipe connection port 101 in an end portion on a first side (a right side of FIG. 1, the same as below) in an axial direction, and includes an opposite pipe connection port 102 in an end portion on a second side (a left side of FIG. 1, the same as below) in the axial direction. Hereinafter, in the present description, a direction parallel to the central axis O of the pipe joint 1 will be referred to also as "the axial direction".

The pipe body 5 is inserted into the pipe joint 1 along the axial direction from the second side toward the first side. The pipe body 5 is, for example, a water or hot water supplying pipe made of polybutene or cross-linked polyethylene. In the present description, a direction in which the pipe body 5 is inserted will be referred to as "an insertion direction ID". Further, in the present description, the first side in the axial direction will be referred to also as "a back side in the insertion direction ID", and the second side in the axial direction will be referred to also as "a front side in the insertion direction ID".

As illustrated in FIG. 1, the pipe joint 1 includes a tubular core material 10 defining the fluid passage on an inner circumferential side, a sealing member 20, and a locking member 30.

The core material 10 is made of, for example, a metal or a resin. The core material 10 has a wall surface 13 orthogonal to the central axis O. The wall surface 13 restricts a depth of insertion when the pipe body 5 is inserted into the pipe joint 1, that is, prevents the pipe body 5 from being inserted on the first side in the axial direction from the wall surface 13.

An outer diameter of an outer circumferential surface 10b on the second side in the axial direction from the wall surface 13 of the pipe joint 1 is about the same as an inner diameter of an inner circumferential surface 5a of the pipe body 5. Here, when the outer diameter of the outer circumferential surface 10b on the second side in the axial direction from the wall surface 13 is about the same as the inner diameter of the inner circumferential surface 5a, it is indicated that the pipe joint 1 and the pipe body 5 are bondable to such an extent that the fluid does not leak outward from the flow path when the fluid is supplied to the flow path in a state where the pipe body 5 is inserted into the pipe joint 1.

As illustrated in FIG. 1, an external thread is formed in the outer circumferential surface of all or a part of the core material 10 on the first side in the axial direction from the wall surface 13, thereby forming the pipe connection port 101. For example, a pipe body, a faucet member or the like including an internal thread formed in an inner circumferential surface (not illustrated in the drawing) is connected to the pipe connection port 101.

As illustrated in FIG. 1, a first groove 14 is formed in the core material 10. In the present description, hereinafter, the first groove 14 will be referred to especially also as "the groove 14 for the sealing member". The groove 14 for the sealing member is formed in an entire circumference of the outer circumferential surface 10b on the second side in the axial direction from the wall surface 13 of the core material 10. The groove 14 for the sealing member receives the sealing member 20.

The sealing member 20 is an endless elastic member such as an O-ring. The sealing member 20 is received in the groove 14 for the endless sealing member that is provided in the entire circumference of the outer circumferential surface 10b on the second side in the axial direction from the wall surface 13 of the core material 10.

As illustrated in FIG. 1, in the state where the pipe body 5 is not inserted into the pipe joint 1, an outer diameter of the sealing member 20 is slightly larger than the outer diameter of the outer circumferential surface 10b on the second side in the axial direction from the wall surface 13. When the pipe body 5 is inserted into the pipe joint 1, the sealing member 20 is deformed to come into contact closely with the inner circumferential surface 5a of the pipe body 5, thereby fluid-tightly sealing a space between the outer circumferential surface 10b on the second side in axial direction from the wall surface 13 of the core material 10 and the inner circumferential surface 5a of the pipe body 5. This prevents fluid leakage.

As illustrated in FIG. 1, a second groove 15 is formed in the core material 10. In the present description, hereinafter, the second groove 15 will be referred to especially also as "the groove 15 for the locking member". The groove 15 for the locking member is formed in the entire circumference of the outer circumferential surface 10b on the second side in the axial direction from the wall surface 13 of the core material 10. In the present embodiment, as illustrated in FIG. 1, the groove 15 for the locking member is provided on the back side in the insertion direction ID (the first side in the axial direction) from the groove 14 for the sealing member.

The groove 15 for the locking member includes a bottom surface 15a along the axial direction, and two side surfaces 15b and 15c intersecting the bottom surface 15a. The side surface 15b is a side surface on the front side in the insertion direction ID (the second side in the axial direction), and the side surface 15c is a side surface on the back side in the insertion direction ID (the first side in the axial direction). The annular locking member 30 is fitted into the groove 15 for the locking member.

The locking member 30 is made of, for example, a metal. More specifically, the locking member 30 is formed, for example, by subjecting one metal plate to pressing, slit formation, bending and the like.

As illustrated in FIG. 1, the locking member 30 annularly extends along a circumferential direction of the core material 10. In a case where the locking member 30 is mounted to the core material 10, at least a part of the locking member 30 is received in the annular groove 15 for the locking member that is provided in the outer circumferential surface 10b on the second side in the axial direction from the wall surface 13 of the core material 10.

In the example illustrated in FIG. 1, the locking member 30 includes a core material engaging portion 31 and a pipe body locking portion 32. The core material engaging portion 31 is received in the groove 15 for the locking member in a state where the locking member 30 is mounted to the core material 10. The pipe body locking portion 32 locks the inner circumferential surface 5a of the pipe body 5 inserted into the pipe joint 1.

The core material engaging portion 31 of the locking member 30 is received in the groove 15 for the locking member, and thereby, displacement of the locking member 30 in the axial direction is restricted in a range of a width of the groove 15 for the locking member in the axial direction. Consequently, the displacement of the locking member 30 in the axial direction is suppressed in a predetermined range.

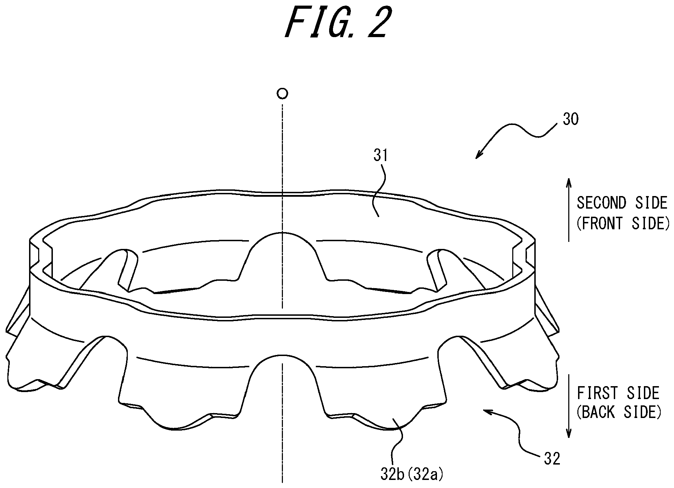

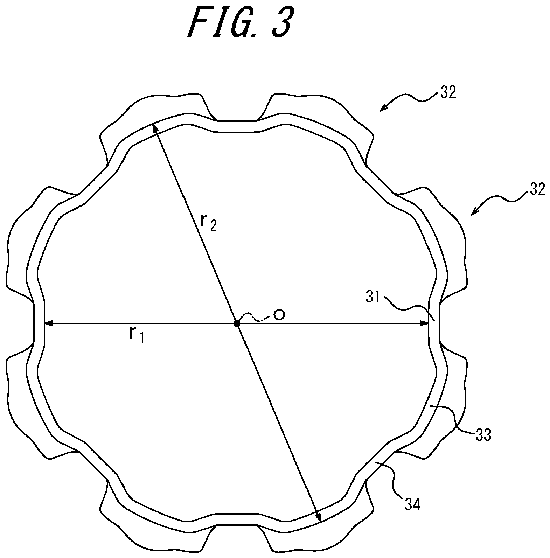

Here, description will be made as to details of the locking member 30 in the natural state with reference to FIG. 2 and FIG. 3. FIG. 2 is an external perspective view schematically illustrating the locking member 30 in the natural state. FIG. 2 illustrates the central axis O in an up-down direction of the drawing, and illustrates the front side in the insertion direction ID (the second side in the axial direction) on an upper side in a case where the locking member 30 is mounted to the core material 10. FIG. 3 is a top view of the locking member 30. FIG. 3 is the top view seen from a position on the front side of the insertion direction ID (the second side in the axial direction) in the case where the locking member 30 is mounted to the core material 10, that is, from the upper side of FIG. 2.

As described above, the locking member 30 includes the core material engaging portion 31 and the pipe body locking portion 32.

The core material engaging portion 31 is formed in an annular shape. Here, when the core material engaging portion 31 is "annular", it is indicated that the portion continuously extends in an endless manner (an O-shape) along the circumferential direction of the core material 10. For example, as understood from FIG. 3, the core material engaging portion 31 is formed in a non-circular shape as seen from the front side in the insertion direction ID. That is, a distance from the central axis O to the core material engaging portion 31 is not constant. Hereinafter, in the present description, a direction spreading from the central axis O to a plane perpendicular to the central axis O will be referred to also as "a radial direction".

Specifically, in the present example, the core material engaging portion 31 includes an outwardly curved portion 33 curved outward in the radial direction as seen from the front side in the insertion direction ID. Also, the core material engaging portion 31 includes an inwardly curved portion 34 curved inward in the radial direction as seen from the front side in the insertion direction ID. In an example illustrated in FIG. 3, the core material engaging portion 31 is formed by alternately bonding eight outwardly curved portions 33 and eight inwardly curved portions 34, respectively. Each outwardly curved portion 33 is smoothly bonded to each inwardly curved portion 34. Consequently, as described later in detail, in the case where the locking member 30 is attached to the core material 10, the locking member 30 is easy to expand its diameter along the outer circumferential surface 10b on the second side in the axial direction from the wall surface 13 of the core material 10. In the example illustrated in FIG. 3, the outwardly curved portions 33 have the same size and shape. Also, in the example illustrated in FIG. 3, the inwardly curved portions 34 have the same size and shape. Therefore, the core material engaging portion 31 is rotationally symmetric about the central axis O.

In the core material engaging portion 31, a minimum diameter (i.e., a minimum inner diameter) r₁ seen from the front side in the insertion direction ID is smaller than a maximum diameter (i.e., a maximum outer diameter of the side surface 15b) R₁ of the side surface 15b on the front side in the insertion direction ID in the groove 15 for the locking member.

Thus, in a case where the minimum diameter r₁ of the core material engaging portion 31 is smaller than the maximum diameter R₁ of the side surface 15b of the groove 15 for the locking member, at least a position with the minimum diameter r₁ of the core material engaging portion 31 (the position of the inwardly curved portion 34 that is closest to the central axis O in the example illustrated in FIG. 3) is located on a central axis O side of a position with the maximum diameter R₁ of the side surface 15b, in a state where the core material engaging portion 31 is received in the groove 15 for the locking member. Therefore, the core material engaging portion 31 can be securely engaged with the groove 15 for the locking member.

The core material engaging portion 31 may be formed so that the minimum diameter r₁ seen from the front side in the insertion direction ID is equal to an outer diameter R₂ of the bottom surface 15a of the groove 15 for the locking member or larger than the diameter R₂ of the bottom surface 15a of the groove 15 for the locking member.

Thus, in a case where the minimum diameter r₁ of the core material engaging portion 31 is equal to the diameter R₂ of the bottom surface 15a of the groove 15 for the locking member or larger than the diameter R₂ of the bottom surface 15a of the groove 15 for the locking member, the core material engaging portion 31 can engage into the groove 15 for the locking member without pressing the bottom surface 15a of the groove 15 for the locking member to the central axis O side. As a result, durability of the locking member 30 can improve.

In the core material engaging portion 31, a minimum value of a perimeter of an inner circumferential surface is larger than a maximum value of a perimeter of a circumscribed circle in a portion on the front side in the insertion direction ID from the groove 15 for the locking member in the core material 10. Here, the perimeter of the inner circumferential surface refers to a length of the inner circumferential surface that is obtained by measuring the inner circumferential surface of the core material engaging portion 31 along the inner circumferential surface in the circumferential direction. Also, the perimeter of the circumscribed circle is a length of the outer circumferential surface (the circumscribed circle) obtained by measuring, along the circumferential direction, the circumscribed circle of the outer circumferential surface in the portion on the front side of the groove 15 for the locking member in the core material 10. Consequently, when the core material engaging portion 31 is fitted through the core material 10 into the groove 15 for the locking member, the core material engaging portion 31 can expand the diameter to such a diameter that the portion can pass through the core material 10. That is, if any external force is not applied to the core material engaging portion 31 (the locking member 30), the core material engaging portion 31 cannot pass through the core material 10, but the core material engaging portion 31 can expand the diameter. The core material engaging portion 31 can expand the diameter to pass through the core material 10. In the present embodiment, the outwardly curved portions 33 and the inwardly curved portions 34 are smoothly bonded, so that the core material engaging portion 31 is easy to expand the diameter along the outer circumferential surface of the core material 10. Note that the locking member 30 expanding the diameter and attached to the core material 10 is then to return to the natural state in a state of being attached to the core material 10.

Furthermore, it is preferable that the minimum value of the perimeter of the inner circumferential surface of the core material engaging portion 31 is larger than the maximum value of the perimeter of the circumscribed circle on the front side of the groove 15 for the locking member in the core material 10, and is 2.0 times or less the maximum value of the perimeter of the circumscribed circle. It is further preferable that the minimum value of the perimeter of the inner circumferential surface of the core material engaging portion 31 is from 1.02 to 1.4 times the maximum value of the perimeter of the circumscribed circle on the front side of the groove 15 for the locking member in the core material 10. If the minimum value of the perimeter of the inner circumferential surface of the core material engaging portion 31 is larger than the maximum value of the perimeter of the circumscribed circle on the front side of the groove 15 for the locking member in the core material 10, the locking member 30 can be attached to the core material 10, and if the minimum value is 1.02 times or more, the locking member 30 is easy to attach to the core material 10. Also, if the minimum value of the perimeter of the inner circumferential surface of the core material engaging portion 31 is 2.0 times or less the maximum value of the perimeter of the circumscribed circle on the front side of the groove 15 for the locking member in the core material 10, the locking member 30 attached to the core material 10 hardly falls off, and if the minimum value is 1.4 times or less, the member more hardly falls off.

The core material engaging portion 31 may be formed so that a maximum diameter (a maximum outer diameter) r₂ seen from the front side in the insertion direction ID is smaller than an inner diameter R₃ of the pipe body 5 to be inserted into the pipe joint 1. Thus, in a case where the maximum diameter r₂ of the core material engaging portion 31 is smaller than the inner diameter R₃ of the pipe body 5, the core material engaging portion 31 is hard to be caught by the pipe body 5 when the pipe body 5 is inserted into the pipe joint 1 into which the locking member 30 is fitted. This makes it easy to insert the pipe body 5 into the pipe joint 1.

The pipe body locking portion 32 extends from the core material engaging portion 31 toward the back side in the insertion direction ID, and the outer circumferential side. In an example illustrated in FIG. 2, the pipe body locking portion 32 includes a plurality of protrusions bonded to the core material engaging portion 31. As illustrated in FIG. 1, a tip end portion (an outer circumferential side end portion) 32a of the pipe body locking portion 32 protrudes to the outer circumferential side of the outer circumferential surface 10b on the second side in the axial direction from the wall surface 13 of the core material 10. Consequently, when the tip end portion (the outer circumferential side end portion) 32a of the pipe body locking portion 32 bites into and engages with the inner circumferential surface 5a of the pipe body 5 as if scratching the inner circumferential surface 5a of the pipe body 5, when the pipe body 5 is inserted into the pipe joint 1. Then, if the pipe body 5 once inserted into the pipe joint 1 is pulled in a direction opposite to the insertion direction ID (a direction toward the second side in the axial direction), the tip end portion (the outer circumferential side end portion) 32a of the pipe body locking portion 32 further bites into the inner circumferential surface 5a of the pipe body 5, to lock the inner circumferential surface 5a of the pipe body 5. Consequently, the pipe body 5 can be prevented from being displaced in the opposite direction to the insertion direction ID, and as a result, the pipe body 5 can be prevented from falling out of the pipe joint 1.

In particular, as illustrated in FIG. 2, the pipe body locking portion 32 of the present embodiment is formed so that the tip end portion 32a has a center protruding at a tip end of the pipe body locking portion 32 having a protruding shape. Thus, the tip end portion 32a of the pipe body locking portion 32 including the plurality of protrusions is formed as a protruding portion 32b protruding from a center of the corresponding protrusion in a width direction (the circumferential direction), so that the protruding portion 32b easily bites into the inner circumferential surface 5a of the pipe body 5. It is easier to prevent the pipe body 5 from falling out of the pipe joint 1.

Note that the pipe body locking portion 32 may extend from the core material engaging portion 31 toward the outer circumferential side in a direction perpendicular to the central axis O of the locking member 30.
Also, in this case, similar effects can be obtained.

Note that in the present embodiment, the locking member 30 extends endlessly along the entire circumference of the core material 10. Therefore, if the core material engaging portion 31 is received in the groove 15 for the locking member, the locking member 30 is firmly held by the core material 10, and position shift of the locking member 30 from the groove 15 for the locking member or excessive deformation of the locking member can be effectively suppressed. Consequently, for example, as compared with a case where the locking member 30 extends in a C-shape with ends, the locking member 30 is harder to be removed from the groove 15 for the locking member. Consequently, the locking member 30 hardly falls off the groove 15 for the locking member, when the pipe body 5 is inserted around the core material 10. Furthermore, the pipe body 5 is inhibited from non-uniformly biting into the locking member 30. Therefore, a function of the locking member 30 locking the pipe body 5 improves, and deformation of the pipe body 5 due to diameter expansion is easily suppressed from an inner circumferential side of the pipe body 5.

Also, in the example illustrated in FIG. 1, the core material engaging portion 31 extends in the axial direction (extends at an angle of 0° relative to the axial direction) in the cross section of the pipe joint 1 along the central axis O, but may extend to be inclined relative to the axial direction (with a constant angle relative to the axial direction).

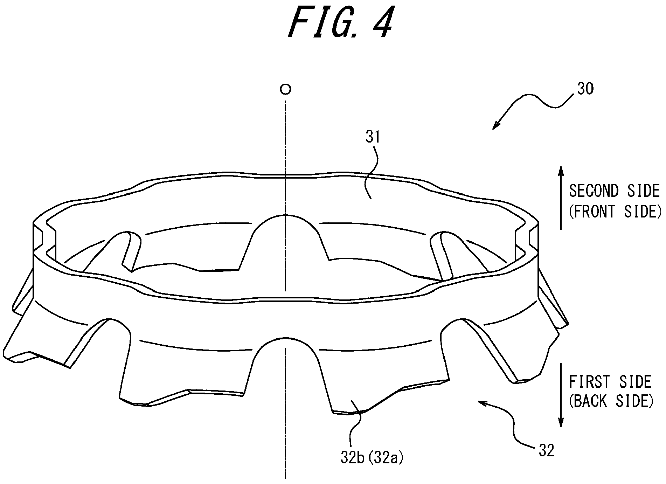

In the locking member 30 illustrated in FIG. 2 and FIG. 3, the protruding portion 32b is formed as the tip end portion 32a in the center of each protrusion forming the pipe body locking portion 32 in the width direction (the circumferential direction), but the locking member 30 is not necessarily limited to this form. For example, as illustrated in FIG. 4, in the locking member 30, the protruding portion 32b may be formed in an end portion of each protrusion in the width direction (the circumferential direction). In a case where the protruding portion 32b is formed in the center of the protrusion, two left and right portions of the protruding portion 32b in the center of the protrusion need to be cut off in a manufacturing process of the locking member 30. On the other hand, in a case where the protruding portion 32b is formed in either end portion of the protrusion, an end portion opposite to the corresponding end portion of the protrusion may be cut off in the manufacturing process of the locking member 30. This can further simplify the manufacturing process.

In the above embodiment, as to a shape of the core material engaging portion 31, it is described that the core material engaging portion includes the outwardly curved portion 33 and the inwardly curved portion 34 as seen from the front side in the insertion direction ID. However, the shape of the core material engaging portion 31 is not limited to this embodiment. For example, the core material engaging portion 31 may include only one of the outwardly curved portion 33 and the inwardly curved portion 34.

Alternatively, for example, the core material engaging portion 31 may be formed in a polygonal shape as seen from the front side in the insertion direction ID. Also, in this case, the core material engaging portion 31 is easy to expand the diameter when fitted into the groove 15 for the locking member in the same manner as in the above embodiment, and hence, the portion is easy to attach to the core material 10.

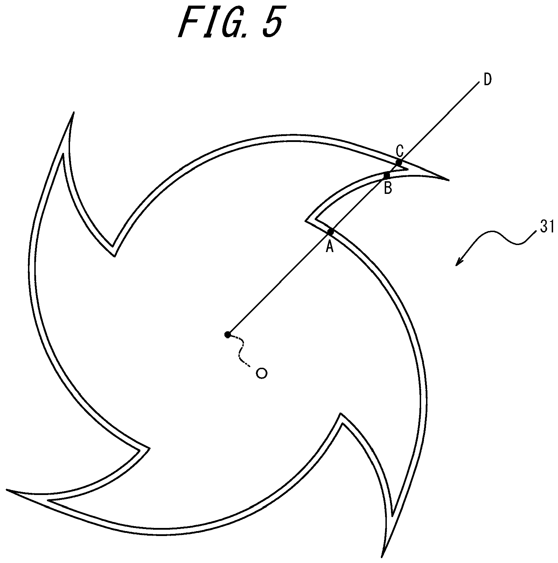

Alternatively, for example, the core material engaging portion 31 may be formed to intersect, a plurality of times, a radial virtual line D extending from the central axis O in the radial direction as seen from the front side in the insertion direction ID. For example, as schematically illustrated in FIG. 5, the core material engaging portion 31 seen from the front side in the insertion direction ID intersects the radial virtual line extending from the central axis O in the radial direction at three points of a point A, a point B and a point C. Also, in such a configuration, the portion is easy to attach to the core material 10.

The present disclosure has been described based on the drawings and examples, but it is to be noted that a person skilled in the art easily makes various modifications and changes based on the present disclosure. Therefore, it is to be noted that these modifications and changes are included in scope of the present disclosure. For example, functions and the like included in respective components are relocatable to be logically consistent, and a plurality of components may be combined into one, or may be divided.

### REFERENCE SIGNS LIST

- 1: pipe joint
- 5: pipe body
- 5a: inner circumferential surface
- 10: core material
- 10b: outer circumferential surface
- 13: wall surface
- 14: groove for a sealing member
- 15: groove for a locking member
- 15a: bottom surface
- 15b, 15c: side surface
- 20: sealing member
- 30: locking member
- 31: core material engaging portion
- 32: pipe body locking portion
- 32a: tip end portion
- 32b: protruding portion
- 33: outwardly curved portion
- 34: inwardly curved portion
- 101, 102: pipe connection port
- ID: insertion direction

## Claims

1. A pipe joint comprising:
a core material into which a pipe body is inserted in a predetermined insertion direction on an outer circumferential side, and
a locking member mounted to the core material, wherein the locking member includes a core material engaging portion received in a groove for the locking member that is formed in an outer circumferential surface of the core material, and a pipe body locking portion locking an inner circumferential surface of the pipe body to be inserted into the core material, and
in the core material engaging portion, in a natural state of the locking member, a minimum diameter seen from a front side in the insertion direction of the pipe body is smaller than a maximum diameter of a side surface forming the groove for the locking member, the side surface being on the front side, and
a minimum value of a perimeter of an inner circumferential surface is larger than a maximum value of a perimeter of a circumscribed circle on the front side of the groove for the locking member in the core material.

2. The pipe joint according to claim 1, wherein the core material engaging portion includes an outwardly curved portion curved outward in a radial direction as seen from the front side.

3. The pipe joint according to claim 1, wherein the core material engaging portion includes an inwardly curved portion curved inward in a radial direction as seen from the front side.

4. The pipe joint according to claim 1, wherein the core material engaging portion includes an outwardly curved portion curved outward in a radial direction as seen from the front side, and an inwardly curved portion curved inward in the radial direction as seen from the front side.

5. The pipe joint according to claim 4, wherein the outwardly curved portion and the inwardly curved portion are smoothly bonded.

6. The pipe joint according to any one of claims 1 to 5, wherein a maximum diameter of the core material engaging portion seen from the front side is smaller than an inner diameter of the pipe body.

7. The pipe joint according to any one of claims 1 to 6, wherein the minimum diameter of the core material engaging portion seen from the front side is equal to a diameter of a bottom surface of the groove for the locking member or larger than the diameter of the bottom surface of the groove for the locking member.

8. The pipe joint according to claim 1, wherein the core material engaging portion intersects, a plurality of times, a virtual line extending from a central axis in a radial direction as seen from the front side.

9. A locking member for use in the pipe joint according to any one of claims 1 to 8.
